# EUROPEAN PATENT APPLICATION

(11) **EP 3 441 274 A1**
(43) Date of publication of application: **13.02.2019**
(21) Application number: 18187332.4
(22) Date of filing: 03.08.2018
(51) Int. Cl.: B60W 30/18, B60W 30/16

(54) **TRAVELING CONTROL DEVICE, VEHICLE, AND TRAVELING CONTROL METHOD**

(30) Priority: 07.08.2017 JP 2017152519
(71) Applicant: Isuzu Motors Limited, Tokyo 140-8722 (JP)
(72) Inventor: NATSUMI, Kouki, Kanagawa, 252-0881 (JP); TAKAHASHI, Naoki, Kanagawa, 252-0881 (JP); HAYASHI, Satoshi, Kanagawa, 252-0881 (JP)
(74) Representative: Dennemeyer & Associates S.A.

(57) **Abstract**

Provided are a traveling control device, vehicle, and traveling control method making it possible to reduce wasteful energy consumption. The traveling control device includes: a traveling-condition determining section configured to determine whether or not necessity of decelerating a vehicle is high, based on a traveling condition; and a traveling control section configured to switch traveling of the vehicle from driven traveling to inertia traveling, when the traveling of the vehicle is the driven traveling and when the traveling-condition determining section determines that the necessity of stopping the vehicle is high. For example, the traveling condition includes information indicating the behavior of the preceding vehicle and traffic-light information on a traffic light in the traveling direction of the vehicle.

## Description

### Technical Field

The present disclosure relates to a traveling control device, a vehicle, and a traveling control method.

### Background Art

Techniques to control autocruise traveling (driven traveling) in which a preset target vehicle-speed is maintained have been traditionally developed. Moreover, from a viewpoint of improving fuel efficiency, there has been a proposed device to control inertia traveling (which may also be referred to as "coasting") of a vehicle during autocruise traveling on condition that the vehicle speed lies in a predetermined range (see e.g., Patent Literature (hereinafter, referred to as "PTL") 1).

### Citation List

### Patent Literature

PTL 1 Japanese Patent Application Laid-Open No. 2012-219986

### Summary of Invention

### Technical Problem

Meanwhile, the driven traveling includes the Adaptive Cruise Control (ACC) that allows a vehicle to travel at a constant speed while following a preceding vehicle with a constant distance being kept between these vehicles. In the driven traveling, when a relative speed of the vehicle to the preceding vehicle is greater than or equal to a predetermined speed, the necessity of stopping the vehicle is high.

The necessity of stopping the vehicle is also high when a traffic light in the vehicle-traveling direction is red.

In a case where the necessity of stopping the vehicle in driven traveling is high, the vehicle is decelerated by controlling the driven traveling for greater safety.

However, while the greater safety can be ensured by decelerating the vehicle, no measures to reduce wasteful energy consumption have been taken.

An object of the present disclosure is to provide a traveling control device, vehicle, and traveling control method which make it possible to reduce wasteful energy consumption.

### Solution to Problem

A traveling control device according to the present disclosure includes: a traveling-condition determining section configured to determine whether or not necessity of decelerating a vehicle is high, based on a traveling condition; and a traveling control section configured to switch traveling of the vehicle from driven traveling to inertia traveling, when the traveling of the vehicle is the driven traveling and when the traveling-condition determining section determines that the necessity of stopping the vehicle is high.

A vehicle according to the present disclosure includes the aforementioned traveling control device.

A traveling control method according to the present disclosure includes: determining whether or not necessity of stopping a vehicle is high, based on a traveling condition; and switching traveling of the vehicle from driven traveling to inertia traveling, when the traveling of the vehicle is the driven traveling and when it is determined that the necessity of stopping the vehicle is high.

### Advantageous Effects of Invention

According to the present disclosure, wasteful energy consumption can be reduced.

### Brief Description of Drawings

FIG. 1 is a block diagram illustrating an exemplary configuration of a vehicle including a traveling control device according to an embodiment of the present disclosure;
FIG. 2 is a block diagram illustrating an exemplary configuration of the traveling control device according to the embodiment of the present disclosure;
FIG. 3 illustrates an example of a traveling schedule generated by the traveling control device; and
FIG. 4 is a flowchart illustrating an example of traveling control operation in the traveling control section.

### Description of Embodiments

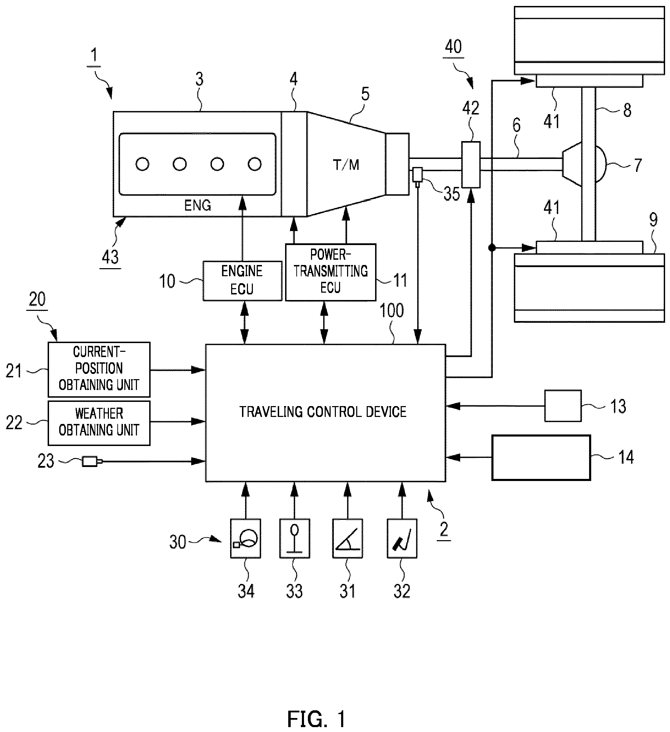

Hereinafter, an embodiment of the present disclosure will be described in detail with reference to the accompanying drawings. To begin with, the configuration of a vehicle including traveling control device 100 according to the embodiment of the present disclosure is described. FIG. 1 is a block diagram illustrating an exemplary configuration of the vehicle including traveling control device 100 according to the embodiment of the present disclosure. Note here that, the illustration and description are given with focuses on parts relevant to traveling control device 100.

Vehicle 1 illustrated in FIG. 1 is, for example, a large vehicle such as a truck, in which a straight-six diesel engine is mounted.

As illustrated in FIG. 1, vehicle 1 includes engine 3, clutch 4, gearbox (transmission) 5, thrust shaft (propeller shaft) 6, differential device (differential gear) 7, driving shaft (drive shaft) 8, and wheels 9, as components of a driving system allowing the vehicle to travel.

The power of engine 3 is transmitted to gearbox 5 via clutch 4, and the power transmitted to gearbox 5 is further transmitted to wheels 9 via thrust shaft 6, differential device 7, and driving shaft 8. In this way, the power of engine 3 is transmitted to wheels 9, so that vehicle 1 travels.

Vehicle 1 also includes braking device 40 as a component of a braking system for stopping the vehicle. Braking device 40 includes footbrakes 41 for applying the resistance to wheels 9, retarder 42 for applying the resistance to thrust shaft 6, and auxiliary brake 43, such as an exhaust brake for applying a load to engine 3.

Vehicle 1 further includes automatic traveling device 2 as a component of a control system for controlling the traveling of vehicle 1. Automatic traveling device 2 is a device allowing vehicle 1 to automatically travel, by controlling the output of engine 3, connection or disconnection of clutch 4, and gear shift of gearbox 5, and automatic traveling device 2 includes multiple control units.

Specifically, automatic traveling device 2 includes engine ECU (engine control unit) 10, power-transmitting ECU (power-transmitting control unit) 11, target-vehicle-speed setting unit 13, increase-value/decrease-value setting unit 14, traveling-condition obtaining unit 20, vehicle-information obtaining unit 30, and traveling control device 100. Note that, engine ECU 10, power-transmitting ECU 11, and traveling control device 100 are connected to one another by an in-vehicle network, so that they can transmit and receive required data and control signals to and from one another.

Engine ECU 10 controls the output of engine 3. Power-transmitting ECU 11 controls the connection or disconnection of clutch 4 and the gear shift of gearbox 5.

Target-vehicle-speed setting unit 13 sets, in traveling control device 100, the target speed of vehicle 1 during driven traveling. Increase-value/decrease-value setting unit 14 sets, in traveling control device 100, a speed decrease value and a speed increase value of vehicle 1 during driven traveling. The target speed, speed decrease value, and speed increase value are parameters used for the automatic traveling of vehicle 1.

Target-vehicle-speed setting unit 13 and increase-value/decrease-value setting unit 14 include an information input interface, such as a display having a touch panel and being disposed, for example, to the dashboard (not illustrated) of a driver's seat, and target-vehicle-speed setting unit 13 and increase-value/decrease-value setting unit 14 receive setting of the aforementioned parameters input by a driver. The target speed, speed decrease value, and speed increase value may appropriately be referred to as "setting information."

Traveling-condition obtaining unit 20 obtains the traveling condition indicating the road conditions and the current position of vehicle 1, and outputs them to traveling control device 100. For example, traveling-condition obtaining unit 20 includes current-position obtaining unit 21 that is a receiver of the Global Positioning System (GPS), weather obtaining unit 22 that obtains the weather during traveling, and surroundings sensor 23 that detects distances and/or vehicle-speed differences between vehicle 1 and surrounding vehicles (e.g., a preceding vehicle, parallel traveling vehicle and/or the like).

Vehicle-information obtaining unit 30 obtains vehicle information indicating driver-handling information and/or the state of vehicle 1, and outputs the vehicle information to traveling control device 100. For example, vehicle-information obtaining unit 30 includes accelerator sensor 31 that detects the depressed amount of an accelerator pedal, brake switch 32 that detects whether or not a brake pedal is stepped on, shift lever 33, turn signal switch 34, and vehicle-speed sensor 35 that detects the speed of vehicle 1.

Traveling control device 100 generates a traveling schedule including the driven traveling (autocruise traveling) and inertia traveling, based on the aforementioned setting information, traveling condition, and vehicle information. Then, traveling control device 100 controls each part of vehicle 1 so that vehicle 1 travels in accordance with the generated traveling schedule.

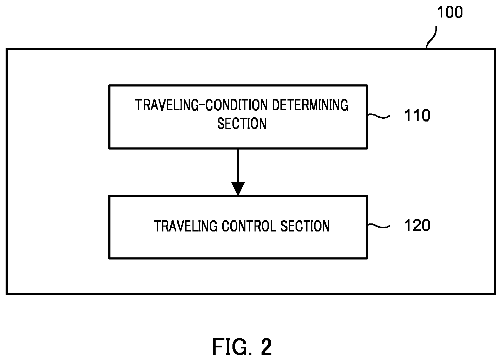

In the embodiment of the present disclosure, the inertia traveling includes engine-braking traveling and neutral inertia traveling (which may, hereinafter, also be referred to as "N coasting"). In the engine-braking traveling, a vehicle travels in which the continuity of the power transmission path between engine 3 and wheels 9 is left and engine braking thus comes into effect by the retarding forces of engine 3. In the neutral inertia traveling, the vehicle travels in which the power transmission path between engine 3 and wheels 9 is cut off. Note that, fuel injections in engine 3 are suspended during the engine-braking traveling and N coasting. Specifically, a throttle valve (not illustrated) is controlled such that the degree of opening of the throttle valve corresponding to the fuel injection quantity is the lowest. Hereinbelow, the inertial traveling is to denote the engine-braking traveling. FIG. 2 is a block diagram illustrating an example of the configuration of traveling control device 100.

As illustrated in FIG. 2, traveling control device 100 includes traveling-condition determining section 110 and traveling control section 120.

Traveling-condition determining section 110 determines whether or not the necessity of stopping vehicle 1 is high, based on the traveling condition, and outputs the determination result to traveling control section 120. Note that, "the necessity of stopping vehicle 1 is high" also means "the possibility of decelerating vehicle 1 is high." Here, the traveling condition includes information indicating the behavior of the preceding vehicle and traffic-light information on a traffic light in the traveling direction of vehicle 1.

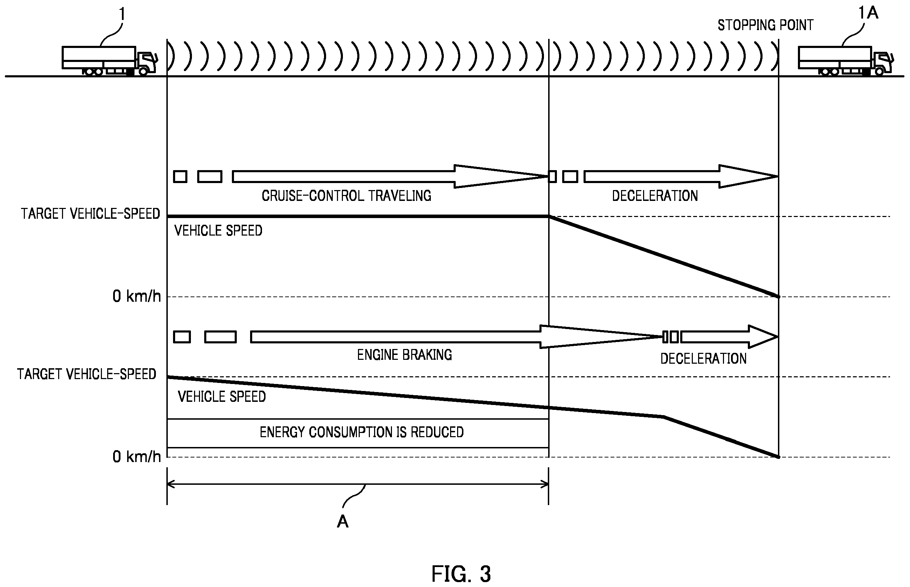

The information indicating the behavior of the preceding vehicle is the speed (relative speed of vehicle 1 to the preceding vehicle) at which vehicle 1 relatively approaches the preceding vehicle as a result of deceleration of preceding vehicle 1A (see FIG. 3), in a case where the ground speed of vehicle 1 is constant. Traveling-condition determining section 110 determines that the necessity of stopping vehicle 1 is high, when the relative speed is 30 km/h or greater.

The traffic-light information on a traffic light in the traveling direction of vehicle 1 is, for example, traffic-light information obtained from the traffic light in the traveling direction of vehicle 1 by road-to-vehicle communication. Traveling-condition determining section 110 determines that the necessity of stopping vehicle 1 is high, when the traffic-light information indicates "red light." The traffic-light information on a traffic light in the traveling direction of vehicle 1 may also be information on the color of the traffic light in the traveling direction to be recognized using an in-vehicle-camera image of vehicle 1.

Traveling control section 120 generates the traveling schedule including the driven traveling and the inertia traveling (engine-braking traveling), and causes vehicle 1 to travel in accordance with the generated traveling schedule.

For example, traveling control section 120 implements traveling at a speed in accordance with the traveling schedule by controlling the fuel injection quantity of engine 3 and/or the like via engine ECU 10 during driven traveling. In addition, during inertia traveling, traveling control section 120 controls the throttle valve (not illustrated) such that the degree of opening of the throttle valve is the lowest. Moreover, traveling control section 120 appropriately controls each part of braking device 40 to stop vehicle 1. The details of the traveling schedule are described below.

Based on the generated traveling schedule, traveling control section 120 controls to switch the traveling of vehicle 1 from one of the driven traveling and inertia traveling to the other one.

Specifically, in a case where the traveling of vehicle 1 is the driven traveling and when traveling-condition determining section 110 determines that the necessity of stopping vehicle 1 is high, traveling control section 120 switches the traveling of vehicle 1 from the driven traveling to the inertia traveling. When vehicle 1 is to be stopped during inertia traveling, traveling control section 120 ends the inertia traveling, and controls each part of braking device 40 to decelerate vehicle 1. Additionally or alternatively, traveling control section 120 switches the traveling of vehicle 1 from the inertia traveling to the driven traveling when there is a relatively greater distance between the vehicle in inertia traveling and preceding vehicle 1A.

FIG. 3 illustrates an example of a traditional traveling schedule on the upper side of the figure and an example of the traveling schedule generated by traveling control section 120 on the lower side of the figure. FIG. 3 shows vehicle 1 (vehicle according to the present disclosure) and preceding vehicle 1A on the uppermost side of the figure.

In the traditional traveling schedule illustrated on the upper side of FIG. 3, traveling control section 120 ends the driven traveling and decelerates vehicle 1 when the traveling of vehicle 1 is the driven traveling and when the distance between vehicle 1 and preceding vehicle 1A is equal to or less than a predetermined distance. With this traveling schedule, traveling control section 120 continues the driven traveling when the distance between vehicle 1 and preceding vehicle 1A is greater than the predetermined distance. When the driven traveling is continued, the fuel injections in engine 3 are continued, so that there is wasteful fuel consumption in the section in which the driven traveling is continued (section A illustrated in FIG. 3).

In consideration of the above, as illustrated in the traveling schedule on the lower side of FIG. 3, when the traveling of vehicle 1 is the driven traveling and when traveling-condition determining section 110 determines that the necessity of stopping vehicle 1 is high, traveling control section 120 switches the traveling of vehicle 1 from the driven traveling to the inertia traveling (engine-braking traveling) in the embodiment according to the present disclosure. Because the fuel injections in engine 3 are not continued by switching the traveling of vehicle 1 to the inertia traveling, the wasteful fuel consumption can be reduced.

Additionally or alternatively, vehicle 1 is decelerated by engine braking until vehicle 1 is decelerated by each part of braking device 40 controlled by traveling control section 120 in the embodiment of the present disclosure. A braking distance for stopping vehicle 1 is shorter in a case where the vehicle speed is reduced by engine braking than in a case where the vehicle speed is not reduced by engine braking. In this way, the engine-braking traveling can be continued longer by a distance corresponding to the reduction in the braking distance. For this reason, the fuel efficiency can be improved.

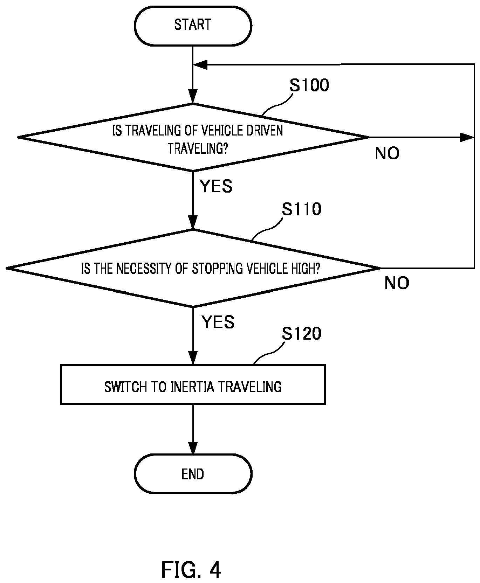

Next, an example of traveling control operation in traveling control section 120 is described. FIG. 4 is a flowchart illustrating an example of traveling control operation in traveling control section 120. Processing in FIG. 4 is performed when vehicle 1 is traveling.

To begin with, traveling control section 120 determines whether or not the traveling of vehicle 1 is the driven traveling (step S100).

When the determination result indicates that the traveling of vehicle 1 is not the driven traveling (step S100: NO), the processing returns before step S100. On the other hand, when the traveling of vehicle 1 is the driven traveling (step S100: YES), the processing proceeds to step S110.

At step S110, traveling control section 120 determines whether or not traveling-condition determining section 110 has determined that the necessity of stopping vehicle 1 is high.

When the determination result indicates that the necessity of stopping vehicle 1 is not determined to be high (step S110: NO), the processing returns before step S100. On the other hand, when the necessity of stopping vehicle 1 is determined to be high (step S110: YES), traveling control section 120 switches the traveling of vehicle 1 from the driven traveling to the inertia traveling (step S120). Then, the present control is ended.

### <Effect of Embodiment>

As described above, traveling control device 100 according to the embodiment of the present disclosure includes: traveling-condition determining section 110 configured to determine whether or not necessity of stopping vehicle 1 is high, based on a traveling condition; and traveling control section 120 configured to switch traveling of vehicle 1 from driven traveling to inertia traveling, when the traveling of vehicle 1 is the driven traveling and when traveling-condition determining section 110 determines that the necessity of stopping vehicle 1 is high. Since the fuel injections in engine 3 are not continued by switching the traveling of vehicle 1 from the driven traveling to the inertia traveling, the wasteful fuel consumption can be reduced.

Additionally or alternatively, according to traveling control device 100 according to the embodiment of the present disclosure, when vehicle 1 in inertia traveling is to be stopped, traveling control section 120 ends the inertia traveling and decelerates to stop the vehicle. Thus, the safety can be ensured.

Additionally or alternatively, according to traveling control device 100 according to the embodiment of the present disclosure, when there is a relatively greater distance between vehicle 1 in inertia traveling and preceding vehicle 1A, the traveling of vehicle 1 is switched from the inertia traveling to the driven traveling (ACC). This allows vehicle 1 to travel while the distance between vehicle 1 and preceding vehicle 1A is kept.

Note that, although the inertia traveling is the engine-braking traveling in the aforementioned embodiment, the present disclosure is not limited to this embodiment, and the inertia traveling may also be the N coasting, for example. When the traveling of vehicle 1 is the driven traveling and when the necessity of stopping vehicle 1 is high, traveling control section 120 switches the traveling of vehicle 1 from the driven traveling to the N coasting, so that the fuel injections in engine 3 are not continued and, thus, the wasteful fuel consumption can be reduced.

In addition, although a single relative speed of vehicle 1 to the preceding vehicle is defined in the aforementioned embodiment, the present disclosure is not limited to this embodiment, and a configuration in which a relative speed is switched to another relative speed depending on whether vehicle 1 is on a local road or freeway may also be possible. For example, the relative speed on the local road is set to 20 km/h. Additionally, the relative speed on the freeway is set to 30 km/h. This can further improve the safety.

Additionally or alternatively, although vehicle 1 is provided with engine 3 as its power source in the aforementioned embodiment, the present disclosure is not limited to this embodiment, and vehicle 1 may also be provided with engine 3 and an electric motor (motor) as its power source, for example. In this case, the electricity is not supplied to the electric motor in inertia traveling. When the traveling of vehicle 1 is the driven traveling and when the necessity of stopping vehicle 1 is high, traveling control section 120 switches the traveling of vehicle 1 from the driven traveling to the inertia traveling, so that the electric power supply to the electric motor is not continued and, thus, the wasteful energy consumption can be reduced.

This application is based on Japan Patent Application No. 2017-152519, filed on August 7, 2017, the disclosure of which is incorporated herein by reference in its entirety.

### Industrial Applicability

The traveling control device according to the present disclosure is useful for a vehicle which requires reduction of wasteful energy consumption.

### Reference Signs List

1 Vehicle
1A Preceding vehicle
2 Automatic traveling device
3 Engine
4 Clutch
5 Gearbox
6 Thrust shaft
7 Differential device
8 Driving shaft
9 Wheel
10 Engine ECU
11 Power-transmitting ECU
13 Target-vehicle-speed setting unit
14 Increase-value/decrease-value setting unit
20 Traveling-condition obtaining unit
21 Current-position obtaining unit
22 Weather obtaining unit
23 Surroundings sensor
30 Vehicle-information obtaining unit
31 Accelerator sensor
32 Brake switch
33 Shift lever
34 Turn signal switch
35 Vehicle-speed sensor
40 Braking device
41 Footbrake
42 Retarder
43 Auxiliary brake
100 Traveling control device
110 Traveling-condition determining section
120 Traveling control section

## Claims

1. A traveling control device, comprising:
a traveling-condition determining section configured to determine whether or not necessity of decelerating a vehicle is high, based on a traveling condition; and
a traveling control section configured to switch traveling of the vehicle from driven traveling to inertia traveling, when the traveling of the vehicle is the driven traveling and when the traveling-condition determining section determines that the necessity of stopping the vehicle is high.

2. The traveling control device according to claim 1, wherein
the traveling condition includes information indicating a behavior of a preceding vehicle and traffic-light information on a traffic light in a traveling direction of the vehicle.

3. The traveling control device according to claim 1 or 2, wherein,
after the traveling of the vehicle has been switched from the driven traveling to the inertia traveling and when the vehicle in inertia traveling is to be stopped, the traveling control section ends the inertia traveling, and decelerates the vehicle to stop the vehicle.

4. The traveling control device according to claim 1 or 2, wherein,
after the traveling of the vehicle has been switched from the driven traveling to the inertia traveling and when there is a relatively greater distance between the vehicle in inertia traveling and a preceding vehicle, the traveling control section switches the traveling of the vehicle from the inertia traveling to the driven traveling.

5. A vehicle comprising the traveling control device according to one of claims 1 to 4.

6. A traveling control method, comprising:
determining whether or not necessity of stopping a vehicle is high, based on a traveling condition; and
switching traveling of the vehicle from driven traveling to inertia traveling, when the traveling of the vehicle is the driven traveling and when it is determined that the necessity of stopping the vehicle is high.
